# EUROPÄISCHE PATENTANMELDUNG

(11) **EP 1 916 620 A1**
(43) Veröffentlichungstag der Anmeldung: **30.04.2008**
(21) Anmeldenummer: 06022480.5
(22) Anmeldetag: 27.10.2006
(51) Int. Cl.: G06Q 10/00, G09F 3/02, G07B 17/00

(54) **Verfahren zum Erzeugen eines Labels sowie Vorrichtung zur Durchführung des Verfahrens**

(71) Anmelder: Deutsche Post AG, 53113 Bonn (DE)
(72) Erfinder: Ogilvie, Thomas, 53179 Bonn (DE); Mayer, Boris, 53129 Bonn (DE)
(74) Vertreter: Jostarndt, Hans-Dieter

(57) **Zusammenfassung**

Die Erfindung betrifft ein Verfahren zum Erzeugen eines auf eine Postsendung aufbringbaren Labels.

Das Verfahren zeichnet sich dadurch aus, dass auf einem ersten Übermittlungsweg ein Code an einen Benutzer übermittelt wird, dass der Code durch eine in einem Einflussbereich des Benutzers befindliche Bedieneinheit an einen Server übermittelt wird und dass der Server einen Prüfungsschritt zur Überprüfung des Codes durchführt und in Abhängigkeit von dem Ergebnis des Prüfungsschritts das Erzeugen des Labels beeinflusst.

## Beschreibung

### Technisches Gebiet

Die Erfindung betrifft ein Verfahren zum Erzeugen eines Labels, wobei das Label einer Bedieneinheit bereitgestellt wird.

Die Erfindung betrifft ferner eine Vorrichtung zur Durchführung des Verfahrens.

### Hintergrund und Stand der Technik

Es ist bekannt, Postsendungen - insbesondere Warensendungen - Label für eine Vereinfachung einer Rücksendung beizufügen.

### Darstellung der Erfindung

Es ist wünschenswert, ein Verfahren zum Erzeugen eines auf eine Postsendung aufbringbaren Labels bereitzustellen, das eine bedarfsgerechte Erzeugung des Labels ermöglicht.

Daher ist es eine Aufgabe der vorliegenden Erfindung, ein Verfahren zum Erzeugen eines Labels so durchzuführen beziehungsweise eine Vorrichtung zum Erzeugen eines Labels so auszugestalten, dass ein hoher Bedienkomfort für einen Benutzer mit einem hohen Schutz vor Manipulationen verbunden wird.

Erfindungsgemäß wird diese Aufgabe durch ein Verfahren mit den Merkmalen des Patentanspruchs 1, ein Computerprogrammprodukt nach Anspruch 13 sowie durch eine Vorrichtung mit den Merkmalen des Anspruchs 14 gelöst.

Somit wird ein Verfahren zum Erzeugen eines Labels so durchgeführt, dass auf einem ersten Übermittlungsweg ein Code (z.B. alphanumerisch) an einen Benutzer übermittelt wird und dass der Code durch eine in einem Einflussbereich des Benutzers befindliche Bedieneinheit an einen Server übermittelt wird. Die Erzeugung des Codes kann hierbei entweder durch einen Versanddienstleister oder durch einen Dritten (z.B. Versandhändler) erfolgen, wobei die Festlegung des Codes entweder durch den Versanddienstleister oder einen Dritten erfolgt.

Die Erfindung sieht eine mehrschrittige Erzeugung eines Labels vor. Dieses mehrschrittige Erzeugen zeichnet sich dadurch aus, dass auf einem ersten Übermittlungsweg ein Code an einen Benutzer übermittelt wird, dass der Code durch eine in einem Einflussbereich des Benutzers befindliche Bedieneinheit an einen Server übermittelt wird und dass der Server einen Prüfungsschritt zur Überprüfung des Codes durchführt und in Abhängigkeit von dem Ergebnis des Prüfungsschritts das Erzeugen des Labels beeinflusst.

Die Übermittlung des Codes an den Benutzer kann auf verschiedene Weise erfolgen.

Eine Weiterbildung der Erfindung sieht vor, dass der Code oder ein Bestandteil des Codes auf verschiedene Übermittlungswege an den Benutzer übermittelt wird.

Eine Übermittlung an den Benutzer erfolgt auch dann, wenn der Code oder ein Bestandteil an eine in einem Einflussbereich des Benutzers befindliche Bedieneinheit übermittelt wird.

Dies ist beispielsweise bei einer Übermittlung an einen Computer oder ein mobiles Benutzerendgerät wie ein Mobiltelefon der Fall.

Eine Weiterbildung des Verfahrens, des Computerprogrammprodukts und der Vorrichtung zeichnet sich dadurch aus, dass der Code einer an den Benutzer gerichteten Postsendung beigefügt ist.

Eine Ausgestaltung des Verfahrens, des Computerprogrammprodukts und der Vorrichtung sieht vor, dass der Code elektronisch an den Benutzer übermittelt wird.

Eine Weiterbildung des Verfahrens, des Computerprogrammprodukts und der Vorrichtung zeichnet sich dadurch aus, dass der Code bei Eintreten eines Ereignisses an den Benutzer übermittelt wird.

Eine Ausgestaltung des Verfahrens, des Computerprogrammprodukts und der Vorrichtung sieht vor, dass der Code bei bzw. vor Eintreten eines Versandereignisses übermittelt wird.

Eine Weiterbildung des Verfahrens, des Computerprogrammprodukts und der Vorrichtung zeichnet sich dadurch aus, dass der Code auf eine Anforderung eines Benutzers übermittelt wird.

Eine Ausgestaltung des Verfahrens, des Computerprogrammprodukts und der Vorrichtung sieht vor, dass die Bedieneinheit ein Computer ist.

Eine Weiterbildung des Verfahrens, des Computerprogrammprodukts und der Vorrichtung zeichnet sich dadurch aus, dass der Prüfungsschritt eine Gültigkeitsprüfung des Codes beinhaltet.

Eine Ausgestaltung des Verfahrens, des Computerprogrammprodukts und der Vorrichtung sieht vor, dass der Prüfungsschritt eine Gültigkeitsprüfung des Codes beinhaltet.

Eine Weiterbildung des Verfahrens, des Computerprogrammprodukts und der Vorrichtung zeichnet sich dadurch aus, dass unter Berücksichtigung des Codes eine Empfängeradresse für die Postsendung automatisch ermittelt wird.

Eine Ausgestaltung des Verfahrens, des Computerprogrammprodukts und der Vorrichtung sieht vor, dass unter Berücksichtigung des Codes eine Absenderadresse für die Postsendung automatisch ermittelt wird.

Zur Weiterentwicklung von Retourenlogistikprozessen sind Online-Frankierlösungen vorteilhaft, wobei sowohl die Einsparung von Prozesskosten als auch die Optimierung der Informationstransparenz möglich ist.

Retourenlogistikprozesse bezeichnen logistische Prozesse zur Handhabung von Retouren.

Die Erfindung beinhaltet sowohl die Weiterbildung eines Logistiksystems als Retourenlogistiksystem als auch die Ausgestaltung eines Logistiksystems mit Handhabungsvorgängen zur Handhabung von Retouren.

Die Erfindung beinhaltet ein Logistiksystem zum Befördern einer Postsendung auf einem Transportweg innerhalb eines Postverteilnetzes, wobei der Transportweg mehrere Knoten des Postverteilnetzes enthält, insbesondere einen Knoten, der einem Zustellpunkt entspricht.

Gegebenenfalls enthält der Transportweg zusätzlich einen oder mehrere Knoten, die jeweils einem Sortierpunkt entsprechen.

Der Begriff Logistiksystem ist im Rahmen der Erfindung in einer weiten Bedeutung zu verstehen. Er umfasst insbesondere Systeme, welche die Mittel und Einrichtungen enthalten, um den Transport von Postsendungen von einem Abgangsort zu einem Zustellpunkt auf einem Transportweg innerhalb eines Postverteilnetzes durchzuführen.

Bei dem Abgangsort handelt es sich beispielsweise um einen Lagerort oder Einlieferungsort des zu transportierenden Gegenstandes.

Der Zustellpunkt wird vorzugsweise von dem Auftraggeber des Transports ausgewählt bzw. wird der Zustellpunkt dem Auftraggeber automatisch vorgegeben. Bei einer Rücksendung ist dies beispielsweise ein Lager eines Händlers oder Herstellers.

Die Erfindung beinhaltet eine Weiterbildung des Verfahrens zum Erzeugen des auf die Postsendung aufbringbaren Labels zu einem Beförderungsverfahren für die Postsendung.

Eine Weiterbildung des Verfahrens, des Computerprogrammprodukts und der Vorrichtung zeichnet sich dadurch aus, dass unter Berücksichtigung des Codes weitere Informationen wie z.B. Art, Umfang oder Zustand eines mit der Postsendung zurückzusendenden Produkts (Ware) ermittelt werden und auf das Retourenlabel aufgebracht und/oder an ein Versandinformationssystem übermittelt werden.

Ferner beinhaltet die Erfindung ein System, welches geeignet ist, die dargestellten Verfahrensschritte auszuführen. Hierzu werden einzelne oder mehrere der in der vorliegenden Anmeldung dargestellten Verfahrens- und/oder Vorrichtungsmerkmale eingesetzt.

Darüber hinaus wird ein Computerprogrammprodukt bereitgestellt, das ein Computerprogramm zur Ausführung eines Verfahrens der zuvor beschriebenen Art enthält.

Vorteile, Besonderheiten und zweckmäßige Weiterbildungen der Erfindung werden auch anhand der Ausführungsbeispiele deutlich, die im Folgenden unter Bezugnahme auf die Figuren beschrieben werden.

### Kurze Beschreibung der Figuren

Von den Figuren zeigt:
- Fig. 1: eine schematische Darstellung einer Ausführungsform eines erfindungsgemäßen Netzwerkknotens 10 mit angebundenen Internetversandinformationssystemen und Anbieterservern 100l,...,100m zur Ausführung von Dienstprogrammen,
- Fig. 2: eine schematische Darstellung einer Integration einer Dokumentenerzeugung in ein erfindungsgemäßes System.

### Darstellung der Erfindung anhand der Figuren

Ein Einsatz der Erfindung in Systemen zum Erzeugen von Labeln oder anderen Aufdrucken zum Versehen von Postsendungen oder anderen zu transportierenden Gütern ist besonders vorteilhaft.

In diesem Fall ist es besonders vorteilhaft das Adressdaten und/oder frankierrelevante Daten dynamische Inhalte im Sinne der Erfindung darstellen.

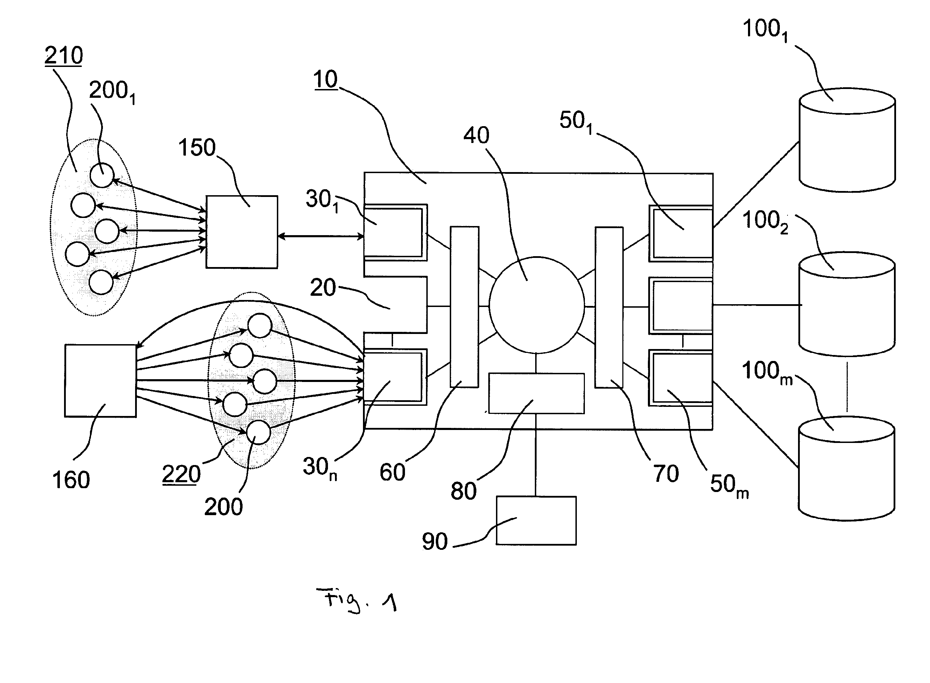

Die Figur 1 zeigt eine schematische Darstellung einer Ausführungsform des erfindungsgemäßen Netzwerkknotens 10 mit angebundenen Internetversandinformationssystemen und Anbieterservern 1001,..., 100m zur Ausführung von Dienstprogrammen.

Die dargestellten Internetversand-Informationssysteme sind bevorzugte Ausführungsbeispiele erfindungsgemäßer Server. Es handelt sich hierbei um Informationssysteme zur Verarbeitung von Versandinformationen. Da diese Systeme vorzugsweise internetbasiert sind, wurde zu ihrer Erläuterung der Begriff Internetversand-Informationssysteme gewählt. Der Fachmann kann die dargestellten Besonderheiten selbstverständlich auch bei Versandinformationssystemen einsetzen, die nicht internetbasiert sind. Eine Internetbasierung ist jedoch bevorzugt.

Ein Anbieterserver oder - was noch bevorzugter ist - mehrere Anbieterserver beinhalten jeweils wenigstens ein Listingtool bzw. z.B. Warenwirtschaftssystem oder genereller eine Speichereinheit zur Wiedergabe von Informationen über als Postsendung an den Benutzer versandte Waren.

Der Begriff Listingtool umfasst alle Dienste, die es ermöglichen, Produktinformationen darzustellen und/oder weiterzuleiten.

Es ist zweckmäßig, dass die Daten von dem Versandinformationssystem und/oder von einem Listingtool automatisiert an den Frankierdienst übergeben werden.

In einer bevorzugten Ausgestaltung der Erfindung kann die Weiterleitung an eine zur Bearbeitung von Dienstanforderungen ausgerüstete Datenverarbeitungseinheit, insbesondere einen Computer, erfolgen.

Weitere Eingabemöglichkeiten sind z.B. schriftliche Erfassung und spätere Digitalisierung, beispielsweise durch eine Dienstleistungseinheit.

Es ist vorteilhaft, dass Nutzer auch bereits das Versandprodukt und die zugehörigen Versandkosten festlegen können. Alternativ kann diese Vorgabe auch direkt automatisiert durch das Versandinformationssystem vorgenommen werden.

Dies gilt insbesondere im Kontext dieses Spezifikationsprozesses.

Hierzu wird eine Auswahlmöglichkeit für die durch den Verkäufer anzubietenden Versandsservices angeboten. Dieses Auswahlfeld ist optimalerweise dynamisch und über eine Schnittstelle mit dem Produkt-/Preissystem eines Versanddienstleisters verbunden, so dass immer das korrekte Preis- und Produktportfolio dargestellt wird bzw. automatisch das für den Anbieter (z.B. Versandhändler) autorisierte Portfolio mit oder ohne Preisinformationen dem Benutzer (z.B. Versandhandelskunden) dargestellt wird, wobei die Darstellung sowohl auf Darstellungsmedien (z.B. Internetseiten) eines Versanddienstleister oder eines Dritten (z.B. Versandhändlers) erfolgen kann.

Die Vorauswahl eines oder mehrerer Versandservices durch einen Verkäufer (z.B. Versandhändler) bedingt außerdem, dass in den Eingabesystemen folgende Bedingung etabliert wird: Wenn über einen Code ein Retourenlabel durch einen Benutzer nachgefragt wird, werden automatisiert an der Hand der über den Code zugeordneten Daten übergeben:
Absenderdaten und/oder
Empfängerdaten sowie
Informationen zur Spezifizierung des ausgewählten Versandprodukts.

Vorzugsweise erfolgt die Datenübergabe über eine Schnittstelle in Form eines spezifizierten Parameter-Sets bzw. nach einer spezifischen Konvention festgelegten Datensatzes an den Frankierdienst.

Der Gegenstand - nachfolgend auch als Artikel bezeichnet - wird entsprechend der Spezifikationsdaten, die die Versandinformationen und -Konditionen enthalten, in dem beschriebenen Versandinformationssystem angezeigt.

Vorzugsweise erfolgt die Anzeige in Abhängigkeit von einem Code. Dies umfasst auch die Abhängigkeit von einem Bestandteil des Codes oder einem durch eine Auswertung - insbesondere durch den Prüfungsschritt - auf Grundlage des Codes ermittelten Wertes.

Der Code wurde vorteilhafterweise vorher an den Benutzer übermittelt, so dass der Benutzer beziehungsweise eine dem Benutzer zugeordnete Bedieneinheit den Code an den Server übermitteln kann.

Die Übermittlung des Codes erfolgt unabhängig von der Art, in der der Code an den Benutzer übermittelt wurde.

Nachfolgend werden besonders bevorzugte Verfahrensschritte zur Durchführung des Verfahrens dargestellt.

In einem ersten Verfahrensschritt wird an den Benutzer - vorzugsweise einen Kunden eines Versandhändlers - ein Code - beispielsweise eine alphanumerische Zeichenabfolge - übermittelt.

Die Übermittlung kann mit einer Warensendung an den Kunden verbunden werden, jedoch gleichfalls auch unabhängig und/oder zusätzlich hierzu (z.B. auf Nachfrage des Benutzers) erfolgen.

Bei einer Übermittlung zusammen mit der Ware erfolgt dies beispielsweise durch einen Paketaufkleber, einem dem Paket beigelegten Informationsträger oder in einem dem Paket beigefügten Anschreiben.

Ferner ist es möglich, dass der Artikel unmittelbar mit einem Code versehen ist.

Alternativ oder zusätzlich hierzu kann eine Übermittlung auf elektronischem Wege - beispielsweise eine E-Mail, SMS oder als Download erfolgen.

Die Übertragung auf elektronischem Wege erfolgt in einer Ausführungsform automatisiert - beispielsweise bei einem Versandereignis wie dem Absenden der an den Benutzer gerichteten Postsendung oder bei Auslieferung der Postsendung an den Benutzer.

Zur Distribution der Codes wird dem Versandhändler ein spezifisches Set an Codes zur Verfügung gestellt bzw. die Codes werden durch den Versandhändler nach festgelegten Konventionen erzeugt.

Zweckmäßigerweise werden dem Code vor der Übermittlung auf dem ersten Übermittlungsweg an den Benutzer geeignete Informationsparameter zugeordnet. Zweckmäßigerweise werden diese Informationsparameter bei dem Versandhändler als Absender des Codes im Bestellsystem abgespeichert.

Bei den zugeordneten Informationen handelt es sich beispielsweise um
- a.: Adressdaten des Empfängers,
- b.: Adressdaten des Absenders
- c.: Warenkorbnummer,
- d.: ggf. Anzahl der in der Sendung enthaltene Artikel,
- e.: ggf. Art (Bezeichnung) der in der Sendung enthaltenen Artikel bzw. eines spezifischen in der Sendung enthaltenen Artikels

Möchte der Kunde eine Sendung retournieren, ruft er auf den Internetseiten des Versandhändlers oder auf einer eigenen Plattform (z.B. einer unabhängigen Retourenplattform, die vom Versanddienstleister betrieben wird) eine spezifische Seite auf, auf der die Eingabe von Codes zur Erzeugung von Retourenlabeln möglich ist.

Optional kann dies auch telefonisch geschehen, wobei der Versand des Retourenlabels dann postalisch zu erfolgen hätte.

Der Kunde gibt nun den entsprechenden Code in die vorgesehene Eingabemaske ein.

Im Falle, dass ein Kunde mehrere Artikel bestellt hatte, die jeder für sich einen Code (s. 1d) enthalten, sollte es möglich sein, mehrere Codes einzugeben und auszuwählen, ob ein oder mehrere Retourenlabel benötigt werden.

Aus dem Datenspeicher des Versandhändler wird durch den eingegebenen Code die Absenderadresse des Kunden und/oder die Adresse des Versandhändlers als Zieladresse aufgerufen und in Form eines Parametersets an die Frankierlösung des Versanddienstleisters übergeben.

Dies kann optional um weitere Informationen wie die E-Mail Adresse des Kunden angereichert werden.

Anhand der eingegebenen Codes ist dem Versandhändler durch einen Datenabgleich mit den Artikeldaten bereits die zu retournierende Ware bekannt, wodurch das Retourenmanagement optimiert werden kann.

Der Versanddienstleister stellt auf Basis der erhaltenen Parameter das Retourenlabel mit der Adressspezifikation zur Verfügung. Dies kann beispielsweise geschehen:
a) Direkt per E-Mail an den Kunden (wenn - wie in 6a beschrieben - E-Mail Daten übergeben wurden),
b) über die beschriebene Schnittstelle als Datei (z.B. PDF) direkt auf die Seite des Versandhändlers, über die der Kunde das Retourenlabel dann abrufen kann,
c) als reiner Datensatz, wobei die Erzeugung des Labels erst durch ein in die Seite des Versandhändlers integriertes Programm veranlasst wird,
d) Zusendung als physisches Label, das vom Versanddienstleister produziert und dem Käufer zugestellt wird.

Der Kunde druckt das gelieferte Retourenlabel aus und liefert die Sendung bei einem Versanddienstleister ein. Optional kann in diesem Prozess durch den Kunden auch die Abholung der Ware mit beauftragt werden.

Die Abrechnung der Retourenleistung erfolgt zwischen Versandhändler und Versanddienstleister auf Basis der verbrauchten Codes.

Das Label kann unterschiedliche Gestalt aufweisen.

Das Label ist vorzugsweise so geschaffen, dass es eine Identifikation und/oder Steuerung von Postsendungen und gegebenenfalls auch die Koordination eines Lagerplatzes ermöglicht.

Zweckmäßigerweise sind die Labels kratz- und schlagfest sowie temperaturbeständig.

Beispiele derartiger Labels sind:
- Barcode-Labels,
- EAS-Etiketten,
- Etiketten für Warenverfolgung,
- intelligente Etiketten,
- Inventuretiketten,
- Palettenetiketten,
- Sicherheitsetiketten,
- Thermoetiketten,
- Thermotransferetiketten,
- Transponderetiketten.

In die Label werden codierte Informationen als Steuerungsinstrumente für die Paketlogistik eingebracht.

Insbesondere können die Label eine fortlaufende Nummerierung - gegebenenfalls mit Prüfziffer -, sonstige Nummerierungen sowie Adressangaben enthalten.

Besonders umfassende Datenmengen können in Smart-Labels eingebracht werden.

RFID-Identifikationssysteme - "Smart-Label" - ermöglichen eine Optimierung der logistischen Vorgänge.

Sie sind damit ein geeignetes Mittel zur Beeinflussung - einschließlich Steuerung flexibler Distributionssysteme für die wegeoptimierte Bereitstellung der Postsendungen.

Eine Übermittlung des Labels an die Bedieneinheit erfolgt vorzugsweise in Form eines intelligenten Dokuments.

In einer Weiterbildung der Erfindung wird ein intelligentes Dokument eingesetzt, das ein Programm umfasst, das bei Vorliegen einer Voraussetzung mittels einer Programmausführungsumgebung ausführbar ist und das mittels eines Darstellungsprogramms darstellbare Inhalte enthält. Das intelligente Dokument zeichnet sich dadurch aus, dass ein Programm-Modul enthalten ist, das dazu ausgebildet ist, eine darstellbare Angabe eines Ergebnisses des Prüfungsschritts zur Prüfung des Vorliegens der Voraussetzung innerhalb des intelligenten Dokuments zu erzeugen.

Eine weitere Ausgestaltung des Verfahrens, des intelligenten Dokuments und der Vorrichtung beinhaltet, dass die Programmausführungsumgebung Bestandteil des Darstellungsprogramms ist.

Nach dem Erwerb eines Artikels durch einen Käufer - beispielsweise durch das Ende einer Auktion oder den Erwerb zu einem Festpreis bei einem Versandhändler - beginnt der Prozess der Versandabwicklung, der durch die vorliegende Erfindung optimiert wird.

Vorzugsweise werden die versand- und/oder frankierrelevanten Daten vom Versandinformationssystem bzw. der Listingtools automatisiert - d.h. ohne weiteres Zutun des Verkäufers - über eine Schnittstelle an den Frankierdienst übergeben.

Es ist zweckmäßig, dass die Daten von dem Versandinformationssystem und/oder von dem Listingtool über den Anbieterserver bereitgestellt werden.

Auf Basis der versand- und/oder frankierrelevanten Daten erzeugt der Frankierdienst das entsprechende Frankierlabel und übermittelt dieses über eine Schnittstelle automatisiert an den Verkäufer.

Dies kann beispielsweise auf folgende Arten geschehen:
- per E-Mail an den Verkäufer,
- über die beschriebene Schnittstelle als Datensatz (z.B. Pdf),
- direkt auf die beschriebenen Versandinformationssysteme oder Listingtools, über die der Verkäufer das Versandlabel dann abrufen kann,
- als reiner Datensatz, wobei die Erzeugung des Labels erst durch ein in das Versandinformationssystem oder das Listingtool integriertes Programm veranlasst wird, oder
- durch Zusendung als physisches Label, das vom Versandienstleister produziert und dem Verkäufer zugestellt wird.

Es ist vorteilhaft, dass die Daten von dem Versandinformationssystem und/oder von dem Listingtool durch eine automatisierte Dienstanforderung an den Frankierdienst übergeben werden.

Ferner ist es zweckmäßig, dass die Dienstanforderung in Form eines Parameter-Sets und/oder einer spezifischen Datensyntax übergeben wird.

Es ist vorteilhaft, dass die Dienstanforderung in einem Bereich des Anbieterservers des Versanddienstleisters transformiert wird.

Ferner ist es zweckmäßig, dass Adressdaten an den Frankierdienst übermittelt werden.

Es ist vorteilhaft, dass eine Produktspezifikation an den Frankierdienst übermittelt wird.

Die Abrechnung der Versanddienstleistung kann auf verschiedene Arten erfolgen:
Die Leistung wird dem Verkäufer vom Versanddienstleister in Rechnung gestellt (Voraussetzung: Bankdaten sind beim Versanddienstleister hinterlegt - z.B. Kunde ist Vertragskunde - und die Authentifizierung des Kunden erfolgt durch ein identifizierendes Kennzeichen in dem dargestellten Parameter-Set).
Die Versanddienstleistung wird durch das Versandinformationssystem oder den Betreiber des Listingtools mit dem Verkäufer abgerechnet. Der Versanddienstleister übergibt in diesem Fall Informationen an den Versandinformationssystembetreiber bzw. Betreiber des Listingstools über die in Anspruch genommenen Versandservices eines Verkäufers und rechnet dann im Nachgang mit dem Versandinformationssystem oder dem Betreiber des Listingtools die durch N (natürliche Zahl) Verkäufer in Anspruch genommenen Versanddienstleistungen ab.

In einer bevorzugten Ausgestaltung der Erfindung überweist der Käufer die Kosten für den erworbenen Artikel sowie die Versandkosten an den Verkäufer. Im Kontext dieses Überweisungsprozesses wird automatisiert (z.B. über den Verwendungszweck identifiziert) der Versandkostenanteil abgezogen und an den Versanddienstleister abgeführt. Erst wenn das Geld beim Versanddienstleister eingegangen ist, wird -automatisiert wie beschrieben - das Versandlabel an den Verkäufer übergeben.

Es ist vorteilhaft, dass bei Einlieferung des Gegenstands und/oder bei der Übermittlung von Versanddaten an den Frankierdienst eine automatische Abbuchung des Portowerts von einem Konto des Verkäufers erfolgt.

Optional kann der Verkäufer bereits im Prozessschritt eine Vorbezahlung des Portowerts vorgenommen haben, bzw. seine Einwilligung gegeben haben, dass nach dem Verkauf des Artikels und der Lieferung der Versanddaten an den Frankierdienst eine automatische Abbuchung des Portowerts von einem Konto des Verkäufers erfolgt.

Alternativ ist es möglich, dass nach dem Verkauf des Gegenstands und der Übermittlung von Versanddaten an den Frankierdienst eine automatische Abbuchung des Portowerts von einem Konto des Käufers erfolgt.

In einer weiteren vorteilhaften Ausgestaltung der Erfindung kann der Verkäufer als Einlieferungskanal eine (erste) elektronische Paketfachanlage (Packstation) auswählen.

Ferner ist es vorteilhaft, die Erfindung so in ein Logistiksystem zu integrieren, dass der Empfänger als Auslieferadresse eine (zweite) Packstation auswählen kann.

Die Auswahl einer Packstation als Auslieferadresse erfolgt vorzugsweise unabhängig von der Auswahl des Einlieferungskanals. Insbesondere ist es möglich und zweckmäßig, dass eine Packstation auch dann als Auslieferadresse gewählt wird, wenn für die Einlieferung ein anderer Einlieferungskanal - beispielsweise eine Abholung bei dem Verkäufer - gewählt wird.

Die Erfindung eignet sich für einen Transport der Gegenstände über beliebig weite Strecken einschließlich des weltweiten Transports der Gegenstände.

Es ist jedoch auch möglich, mit Hilfe der Erfindung eine Vor-Ort-Verkaufseinrichtung - beispielsweise als ein automatisiertes Ladenlokal - bereitzustellen.

Dies geschieht beispielsweise durch eine Ausgestaltung, bei der die erste Packstation und die zweite Packstation identisch sind.

Ferner ist es vorteilhaft, dass das Versandentgelt automatisch ermittelt wird.

Eine bevorzugte Ausgestaltung der Erfindung ist dadurch gekennzeichnet, dass das Versandentgelt in Abhängigkeit von der Einlieferungs- und/oder Absenderadresse ermittelt wird.

Besonders zweckmäßig ist folgende Kombination dieser Merkmale:
Falls der Verkäufer als Einlieferungskanal oder der Empfänger als Auslieferadresse eine elektronische Packstation oder einen anderen spezifischen Adresstyp gewählt hat, wird das Versandentgelt in Abhängigkeit von der Einlieferungs- und/oder Absenderadresse automatisch ermittelt.
Erfindungsgemäß besteht auch die Möglichkeit, dass, wenn der Käufer eine Lieferung an die elektronische Paketfachanlage - nachfolgend Packstation genannt - wünscht, aber nicht Packstationkunde ist, die beim Versandinformationssystem vorliegenden Daten (z.B. E-Mail-Adresse) genutzt oder ergänzende Daten (z.B. Mobilfunknummer) einmalig abgefragt werden, so dass die Sendung auch an eine Packstation ausgeliefert werden kann.

In diesem Fall würde der Käufer wie beim bestehenden Packstation-Prozess für registrierte Kunden eine Benachrichtigung erhalten, die einen Transaktionscode enthält, mit dem die Sendung an der Packstation ausgelöst werden kann.

In einem besonders vorteilhaften Fall wird das Entgelt für den Warenwert durch den eine elektronische Treuhandeinheit, insbesondere einen Paymentprovider, das Versandinformationssystem oder das Listingtool treuhänderisch so lange zurückgehalten, bis die Ware an den Käufer ausgeliefert worden ist, wobei die einzelnen Schritte hierfür folgendermaßen aussehen könnten und gleichzeitig eine Automatisierung (Push-Funktion) für Tracking & Tracing (T&T) umfasssen:

Die Informationen des auf dem Versandlabel aufgebrachten Identifizierers (z.B Barcode) werden auch als Datensätze über eine Schnittstelle in die Applikation zur Verwaltung von Auktionen (sowohl käufer- als auch verkäuferseitig) gespeichert und an den Paymentprovider übertragen.

Diese Applikation fragt regelmäßig automatisiert bei einer T&T Datenbank des Versanddienstleisters ab, ob es einen neuen Trackevent für den betreffenden Identcode gibt.

Alternativ wird der über das oben dargestellte Verfahren erzeugte Identifizierer nach Auslieferung an und Ausdruck durch den Verkäufer in die T&T Datenbank übertragen und dort "geflaggt", so dass, wann immer ein neues T&T Event vorliegt, dieses proaktiv an die Applikation des Auktionshauses / Versandinformationssystems übertragen wird.

Für den Fall, dass es einen neuen Trackevent gibt, wird in der Applikation für den Verkäufer und Käufer dieser neue Status automatisch sichtbar gemacht.

Als Trackevent wird die Erfassung und/oder Übermittlung einer Information über eine Änderung eines Beförderungstatus einer Sendung bezeichnet, beispielsweise ihre Abholung oder Auslieferung.

Sobald die Sendung ausgeliefert worden ist (also Trackevent: Sendung ausgeliefert), wird dies auch dem Paymentprovider mitgeteilt, so dass erst dann das Geld für den Verkäufer freigegeben wird.

In einem Unterfall kann es sich hierbei um eine Nachnahmezahlung handeln, d.h. sofort nach Auktionsende kann der Käufer als Zahloption "Nachnahme" auswählen. In diesem Fall erhält der Verkäufer sofort das Versandlabel. Der Prozess ist ansonsten identisch, nur dass der Nachnahmebetrag vom Logistiker an den Paymentprovider übergeben wird, dieser jedoch mit dem Auslieferungsscan bereits das Geld für den Verkäufer freigibt.

Nach Ende der Auktion erhält der Verkäufer einen Link zur Verfügung gestellt, über den er das erstellte und bezahlte Label - hierbei handelt es sich je nach Ausgestaltung um das Versandlabel und/oder um das Frankierlabel - per Mausklick abrufen kann (z.B. als PDF oder in Form einer HTML Seite, wobei die Adressdaten automatisiert übernommen werden und auch das vorausgewählte Produkt und die damit zusammenhängende Bezahlung berücksichtigt wird).

Alternativ erhält er das Label als Datei zugeschickt oder erhält einen Code, über den er das Label an einem Verkaufsort (z.B. einer Packstation) abholen kann. Durch diesen Prozess wird der Abwicklungsaufwand beim Verkauf von Artikeln über ein Versandinformationssystem in Bezug auf die Versandabwicklung optimiert, da das fertige und bezahlte Versandlabel nach der Auktion ohne weitere Handlingsaufwände sofort angeboten wird und nur noch ausgedruckt werden muss.

Es ist besonders vorteilhaft, Tracking & Tracing zu integrieren. Dies geschieht zweckmäßigerweise durch ein elektronisches System zur Sendungsverfolgung, wobei der Begriff Tracking die Ermittlung des aktuellen Status einer Sendung bezeichnet. Der Begriff Tracing beschreibt die Tatsache, dass der genaue Sendungsverlauf (insbesondere der Transportweg der Sendung) nachträglich mit allen wichtigen Ereignissen rekonstruierbar ist.

Eine besonders bevorzugte Implementierung der Erfindung soll an dem Ausführungsbeispiel eines Netzwerkknotens 10 erläutert werden, der im Folgenden als Transformationsknoten bezeichnet wird.

Über das Internet ist der Transformationsknoten 10 an mehrere Internetversandinformationssysteme angebunden. Beispielhaft sind in der Figur 1 dabei Anbindungen an zwei Internetversandinformationssysteme dargestellt, die in unterschiedlichen Ausführungsformen realisiert sind.

In einem der dargestellten Fälle ist der Transformationsknoten 10 mit einem Versandinformationssystemserver 150 eines Internetversandinformationssystems verbunden, auf den Nutzer des Versandinformationssystems ihrerseits mittels Nutzercomputern 200 zugreifen. Die Gruppe der Nutzercomputer 200 der Markplatznutzer ist in der Figur 1 mit der Bezugsziffer 210 versehen. Eine direkte Verbindung zwischen den Nutzercomputern 200 und dem Transformationsknoten 10 besteht dabei nicht, so dass der Datenaustausch zwischen den Nutzercomputern 200 und dem Transformationsknoten 10 über den Versandinformationssystemserver 150 erfolgt. Ein derartiges Internetversandinformationssystem wird im Folgenden als Transit-Versandinformationssystem bezeichnet und der Versandinformationssystemserver 150 eines derartigen Internetversandinformationssystems als Konsolidatorquelle.

In dem weiteren dargestellten Fall sind die Nutzercomputer 200 sowohl mit dem Transformationsknoten 10 als auch mit dem Versandinformationssystemserver 160 verbunden, so dass ein Datenaustausch unmittelbar zwischen den Computern 200 und dem Transformationsknoten 10 erfolgen kann. Ein derart ausgeführter Internetversandinformationssystem wird im Folgenden als Flächen-Versandinformationssystem bezeichnet und der Versandinformationssystemserver 160 eines solchen Internetversandinformationssystems als Streuquelle. Die Gruppe der Nutzercomputer 200, der Marktplatznutzer, ist in diesem Fall mit der Bezugsziffer 220 versehen.

Der Zugriff auf das Internetversandinformationssystem erfolgt im Falle des Transit-Versandinformationssystems und im Falle des Flächen-Versandinformationssystems über das Internet auf einer Webseite des Internetversandinformationssystems, die von dem Versandinformationssystemserver 150, 160 bereitgestellt und mit einem Browserprogramm, das in den Nutzercomputern 200 ausgeführt wird, an einem Anzeigemittel der Nutzercomputer 200 dargestellt wird.

Der Transformationsknoten 10 enthält in einer vorteilhaften Ausführungsform der Erfindung äußere Konnektoren 30, die im Falle des Transit-Versandinformationssystems mit der Konsolidatorquelle 150 und im Falle des Flächen-Versandinformationssystems mit den Nutzercomputern 200 über ein Kommunikationsnetzwerk, vorzugsweise das Internet, verbunden sind. Die äußeren Konnektoren 30₁,...,30ₙ sind in Konnektorsteckplätze 20 des Transformationsknotens 10 eingesetzt.

Innerhalb des Transformationsknotens 10 besteht eine Verbindung zwischen den äußeren Konnektoren 30₁,...,30ₙ und einer Autorisier- und Authentifiziereinheit 60, die ihrerseits mit der Transformationseinheit 40 in Verbindung steht. Für eine direkte Datenübertragung zwischen den äußeren Konnektoren 50₁,...,50ₘ und der Transformationseinheit 40 kann die Autorisier- und Authentifiziereinheit 60 überbrückt werden.

Die Transformationseinheit 40 ist mit einer Prüfeinheit 70 verbunden, die ihrerseits mit inneren Konnektoren 50₁,..., 50ₘ in Verbindung steht. Auch hier kann eine direkte Verbindung zwischen der Transformationseinheit 40 und den inneren Konnektoren 50₁,..., 50ₘ geschaffen werden, bei welcher die Prüfeinheit 70 überbrückt wird. Die inneren Konnektoren 50₁,..., 50ₘ sind ebenfalls in Konnektorsteckplätze des Transformationsknotens 10 eingesetzt und verbinden den Transformationsknoten 10 mit Servern 100₁,..., 100ₘ, auf denen Dienstprogramme zur Ausführung von Internetdiensten ausgeführt werden.

Ferner umfasst der Transformationsknoten 10 eine Steuer- und Berichtseinheit 80 zur Administrierung des Transformationsknotens 10 und zur Protokollierung.

Der Transformationsknoten 10 kann als Hardware oder als Software ausgebildet sein. In einer vorteilhaften Ausführungsform der Erfindung wird er dabei in Form mehrerer Softwaremodule realisiert, die in einem Internetserver ausgeführt werden.

Den Nutzern eines Internetversandinformationssystems werden Internetdienste angeboten, die von einem Dienstanbieter zur Verfügung gestellt werden, der unabhängig von dem Versandinformationssystembetreiber sein kann. Dienstprogramme zur Ausführung der Internetdienste werden dabei auf jeweils wenigstens einem Anbieterserver 100₁,..., 100ₘ bereitgestellt, der von dem Dienstanbieter betrieben wird. Bei den Internetdiensten handelt es sich in einer vorteilhaften und später näher beschriebenen Anwendung der Erfindung um Frankier- und Logistikdienste, die beispielsweise eine Erzeugung von elektronischen Frankiervermerken, eine Erzeugung von Adressetiketten für den Versand von Postsendungen oder eine Sendungsverfolgung (Tracking) von Postsendungen ermöglichen und von einem Logistikdienstleister angeboten werden.

Die Anforderung der Internetdienste wird mittelbar oder unmittelbar auf einer Webseite des Internetversandinformationssystems beispielsweise durch die Betätigung einer auf der Webseite angeordneten Schaltfläche initiiert. Die Erfindung ermöglicht es dabei, dass ein Internetdienst nicht auf einer Webseite des Dienstanbieters, sondern direkt auf der Webseite des Internetversandinformationssystems angefordert werden kann. Insbesondere können dabei auch Webseiten, die bei der Ausführung des Dienstes gegebenenfalls als Bearbeitungsergebnis bzw. Teil-Bearbeitungsergebnis angezeigt werden, dem Erscheinungsbild der Webseiten des Internetversandinformationssystems in einfacher Weise durch den Transformationsknoten 10 angepasst werden.

Mit dem Aufruf des Internetdienstes auf der Webseite des Internetversandinformationssystems ist die Erzeugung einer Dienstanforderung verbunden, die insbesondere Angaben zur Ausführung des Internetdienstes enthält. Dabei handelt es sich beispielsweise um Nutzerdaten des Versandinformationssystemnutzers, die dieser in einem Dialogfeld der Webseite eingeben kann oder die in einer Datenbank des Versandinformationssystembetreibers gespeichert sind. Ferner enthält die Dienstanforderung Identifizierungsdaten des Internetversandinformationssystems und umfasst wenigstens eine Anweisung, die es dem Transformationsknoten 10 ermöglicht, den angeforderten Internetdienst zu identifizieren. Diese Anweisung kann dabei auch implizit in der Dienstanforderung enthalten sein. So kann es beispielsweise vorgesehen sein, dass der angeforderte Internetdienst bzw. der zur Ausführung des Internetdienstes vorgesehene Anbieterserver 100₁,...,100ₘ in dem Transformationsknoten 10 anhand der Art der in der Dienstanforderung enthaltenen Angaben identifiziert wird.

Im Falle des Flächen-Versandinformationssystems wird die Dienstanforderung durch in eine Webseite eingebrachte Skripte generiert und direkt von dem Nutzercomputer 200 über das Internet an den Transformationsknoten 10 übermittelt. Bei einem Transit-Versandinformationssystem kann die Dienstanforderung entweder durch Skripte in der Webseite des Internetversandinformationssystems erzeugt und von dem Nutzercomputer 200 über die Konsolidatorquelle 150 an den Transformationsknoten 10 übermittelt werden, oder sie kann nach der Übermittlung einer entsprechenden Aufforderung von dem Nutzerzcomputer 200 an die Konsolidatorquelle 150 innerhalb der Konsolidatorquelle 150 generiert werden.

Gleichfalls ist es bei einem Transit-Versandinformationssystem möglich, dass die Dienstanforderung durch ein Skript mit dem Browser-Programm des Nutzercomputers 200 erzeugt und durch die Konsolidatorquelle 150 beispielsweise um Identifizierungsangaben des Internetversandinformationssystems, um in einer Datenbank der Konsolidatorquelle 150 gespeicherte Nutzerdaten oder um in der Datenbank der Konsolidatorquelle 150 gespeicherte Versandinformationssystem- und/oder Nutzerberechtigungsprofile ergänzt wird. Bei einem Flächen-Versandinformationssystem werden derartige Angaben durch eine Funktionalität der in der Webseite des Internetversandinformationssystems enthaltenen Skripte in die Dienstanforderung eingebracht.

Ferner ist es möglich, dass eine einzige Dienstanforderung eine Anforderung mehrerer Internetdienste enthält.

Die Verbindung zwischen dem Transformationsknoten 10 und einem Internetversandinformationssystem erfolgt über einen äußeren Konnektor 30₁,...,30ₙ, der individuell an das Internetversandinformationssystem angepasst ist. In den äußeren Konnektoren 30₁,..., 30ₙ werden dabei insbesondere Formatänderungen der Dienstanforderung und der später beschriebenen, in den Anbieterservern ermittelten Bearbeitungsergebnisse vorgenommen.

Dabei handelt es sich um statische Formatänderungen, die unabhängig von dem Inhalt der Dienstanforderung vorgenommen werden. Beispiele für derartige Formatänderungen sind Umsetzungen von Protokollformaten, wie z.B. eine Umsetzung von EDIFACT-Dokumenten in XML-Dokumente und umgekehrt, sowie Änderungen von Zeichensatzkodierungen und Änderungen von Feldbezeichnungen und -reihenfolgen in der Dienstanforderung. So können beispielsweise Datensätze, wie etwa Nutzerdaten, deren Format auf die Erfordernisse des Versandinformationssystemservers 150, 160, wie etwa ein bestimmtes in dem Versandinformationssystemserver 150, 160 verwendetes Datenbankformat, ausgerichtet sind, konvertiert werden.

Durch die Möglichkeit der Formatänderung in den äußeren Konnektoren 30₁,...,30ₙ kann dabei sichergestellt werden, dass Änderungen, welche die Kommunikation zwischen dem Transformationsknoten 10 und einem Internetversandinformationssystem betreffen, keine Auswirkungen auf die innere Funktionalität des Transformationsknotens 10 und keine Auswirkung auf die Gestaltung der Anbieterserver 100₁,...,100ₘ bzw. der auf den Anbieterservern 100₁,...,100ₘ ausgeführten Dienstprogramme haben.

Zur Anbindung einer Vielzahl von Internetversandinformationssystemen verfügt der Transformationsknoten 10 über eine Vielzahl von Konnektorsteckplätzen 20 zur Aufnahme von äußeren Konnektoren 30₁,..., 30ₙ. Dabei ist es möglich, äußere Konnektoren 30₁,..., 30ₙ im laufenden Betrieb des Transformationsknotens einzustecken und zu entfernen, so dass ein unterbrechungsfreier Betrieb des Transformationsknotens 10 bei einem Hinzutreten oder einem Wegfall eines Internetversandinformationssystems möglich ist. Bei Änderungen, die an einem äußeren Konnektor 30₁,..., 30ₙ durchgeführt werden, kann dieser ebenfalls im aktivierten Zustand des Transformationsknotens 10 entfernt, angepasst und wieder eingesteckt werden, so dass auch hier keine Betriebsunterbrechung des Transformationsknotens 10 erforderlich ist.

Eine Dienstanforderung wird von dem Transformationsknoten 10 an demjenigen äußeren Konnektor 30₁,...,30ₙ empfangen, der dem entsprechenden Internetversandinformationssystem zugeordnet ist, und es wird gegebenenfalls eine Formatänderung der vorgenannten Art vorgenommen. Ein Unterschied in Bezug auf die unterschiedlichen Arten von Versandinformationssystemen besteht dabei im Grundsatz nicht.

Von einem äußeren Konnektor 30₁,..., 30ₙ wird die Dienstanforderung innerhalb des Transformationsknotens 10 an eine Authentifizier- und Autorisiereinheit 60 übergeben, die zunächst in einem Authentifizierungsschritt überprüft, ob Internetdienste des Dienstanbieters grundsätzlich genutzt werden dürfen. Die Authentifizierung erfolgt dabei auf der Basis der Identität des Internetversandinformationssystems und/oder auf der Basis der Identität des Versandinformationssystemnutzers.

Die Authentifizierung geschieht anhand von Authentifizierungsinformationen, die in der Dienstanforderung enthalten sind und deren Authentizität durch den Einsatz kryptographischer Verfahren sichergestellt wird. Geeignete kryptographische Verfahren sind beispielsweise digitale Signaturen der Dienstanforderung oder eines Teils davon. Ebenso kommt es in Frage, dass Inhalte der Dienstanforderung mit einem dem Internetversandinformationssystem oder dem Versandinformationssystemnutzer zugeordneten Schlüssel (asymmetrische Verschlüsselung mit zertifizierten Schlüsseln) oder mit einem im Vorfeld zwischen dem Transformationsknoten 10 und dem Internetversandinformationssystem bzw. dem Versandinformationssystemnutzer ausgetauschten symmetrischen Schlüssel (symmetrische Verschlüsselung mit "pre-shared key") verschlüsselt sind.

Ist eine erfolgreiche Authentifizierung nicht möglich, bedeutet dies, dass es sich nicht um eine authentische Dienstanforderung des Nutzers eines registrierten Internetversandinformationssystems handelt oder dass der Versandinformationssystemnutzer aus anderen Gründen nicht zur Inanspruchnahme von Internetdiensten des Dienstanbieters berechtigt ist. In diesem Fall erzeugt die Autorisier- und Authentifiziereinheit 60 eine Fehlermeldung, die über den äußeren Konnektor 30₁,...,30ₙ an den Nutzercomputer 200 übermittelt wird. Ferner kann eine Protokollierung der Dienstanforderung mittels der später erläuterten Steuer- und Berichtseinheit 80 vorgesehen sein.

Nach erfolgreicher Authentifizierung stellt die Authentifizier- und Autorisiereinheit 60 in einem Autorisierungsschritt die Berechtigung des Versandinformationssystemnutzers zur Nutzung von Internetdiensten fest. Dabei wird geprüft, welche Internetdienste in welchem Umfang durch den Versandinformationssystemnutzer genutzt werden dürfen. Dies erfolgt ebenfalls auf der Basis der Identität des Internetversandinformationssystems und/oder der Identität des Versandinformationssystemnutzers.

Die Autorisierung eines Internetversandinformationssystems erfolgt anhand eines Versandinformationssystemberechtigungsprofils, das vorzugsweise in der Authentifizier- und Autorisiereinheit 60 hinterlegt ist. Das Versandinformationssystemberechtigungsprofil enthält dabei Angaben darüber, in welchem Umfang Internetdienste von Nutzern des Versandinformationssystems in Anspruch genommen werden können, d.h. welche Funktionen innerhalb des Internetdienstes von Nutzern des Versandinformationssystems ausgeführt werden können.

Die Autorisierung eines Versandinformationssystemnutzers erfolgt vorzugsweise anhand eines Nutzerberechtigungsprofils in der Dienstanforderung, das ebenfalls kryptographisch abgesichert ist. Das Nutzerberechtigungsprofil wird vorzugsweise von Seiten des Internetversandinformationssystems durch den Versandinformationssystemserver 150, 160 bzw. ein in die Webseite des Internetversandinformationssystems eingebettetes Skript in die Dienstanforderung eingebracht, oder es ist in dem Transformationsknoten 10 in einer Datenbank hinterlegt. In dem Nutzerberechtigungsprofil ist dabei angegeben, in welchem Umfang der Nutzer Internetdienste des Dienstanbieters in Anspruch nehmen kann. Auf diese Weise kann der Versandinformationssystembetreiber die Nutzer des Internetversandinformationssystems mit unterschiedlichen Zugriffsrechten für die Internetdienste des Dienstanbieters ausstatten.

Innerhalb des Internetdienstes zur Verfügung stehende Funktionen bzw. der Umfang, in dem der Internetdienst in Anspruch genommen werden kann, beziehen sich dabei beispielsweise auf verschiedene Zahlungsmöglichkeiten für die Inanspruchnahme des Internetdienstes, die Möglichkeit zur Speicherung von Daten auf dem Anbieterserver 100₁,...,100ₙ zur Wiederverwendung bei einem erneuten Zugriff sowie die Größe des dafür zur Verfügung stehenden Speicherplatzes und andere zusätzliche Dienste, die im Rahmen des Internetdienstes angeboten werden.

Zur Durchführung der Autorisierung prüft die Autorisier- und Authentifiziereinheit 60 anhand des Versandinformationssystemberechtigungsprofils und/oder des Nutzerberechtigungsprofils, ob und in welchem Umfang der Versandinformationssystemnutzer zur Inanspruchnahme des angeforderten Internetdienstes oder der angeforderten Internetdienste berechtigt ist. Ergibt die Prüfung, dass der Versandinformationssystemnutzer keine Berechtigung zur Inanspruchnahme des angeforderten Internetdienstes oder der angeforderten Internetdienste besitzt, wird vorzugsweise eine Fehlermeldung erzeugt und über den äußeren Konnektor 30₁,...,30ₙ an den Nutzercomputer 200 des Versandinformationssystemnutzers übermittelt.

Falls die angeforderten Internetdienste erst bei einer Auswertung der Dienstanforderung in der Transformationseinheit 40 identifiziert werden können, übergibt die Autorisier- und Authentifiziereinheit 60 das Versandinformationssystemberechtigungsprofil bzw. das Nutzerberechtigungsprofil an die Transformationseinheit 40. Auch in diesem Fall kann jedoch innerhalb der Autorisier- und Authentifiziereinheit 60 überprüft werden, ob der Versandinformationssystemnutzer überhaupt zur Inanspruchnahme von Internetdiensten des Dienstanbieters berechtigt ist, wobei eine Fehlermeldung erzeugt und an den Nutzercomputer 200 des Versandinformationssystemnutzers übermittelt wird, wenn dies nicht der Fall ist.

In dem Fall, dass mit der Dienstanforderung mehrere Internetdienste angefordert werden, entspricht die Authentifizierung und Autorisierung in der Authentifizier- und Autorisiereinheit 60 einer Zentralanmeldung (Single Sign-on) des Versandinformationssystemnutzers für die verschiedenen Internetdienste.

Die Transformationseinheit 40 nimmt die Dienstanforderung gegebenenfalls zusammen mit den ermittelten Berechtigungsinformationen von der Authentifizier- und Autorisiereinheit 60 entgegen. Abhängig von dem Inhalt der Dienstanforderung und gegebenenfalls abhängig von den in der Authentifizier- und Autorisiereinheit 60 ermittelten Berechtigungsinformationen wird die Dienstanforderung durch die Transformationseinheit 40 konvertiert. Da die Konvertierung im Gegensatz zu der statischen Formatänderung, die in den äußeren Konnektoren 30₁,...,30ₙ vorgenommen wird, in Abhängigkeit von dem Inhalt der Dienstanforderung durchgeführt wird, wird sie hier auch als intelligente Konvertierung bezeichnet.

In der Transformationseinheit 40 werden zur intelligenten Konvertierung Prozesse ausgeführt, die eine Weiterleitung der Dienstanforderung an das betreffende auf einem der Anbieterserver 100₁,...,100ₘ ausgeführte Dienstprogramm ermöglichen. Im dem Fall, dass mit einer Dienstanforderung mehrere Internetdienste angefordert werden, erfolgt für jeden der Dienste eine Weiterleitung der Dienstanforderung oder des betreffenden Teils der Dienstanforderung an einen Anbieterserver 100₁,...,100ₘ in der im Folgenden beschriebenen Weise.

Die Transformationseinheit unternimmt dabei ein so genanntes Routing der Dienstanforderung, d.h. abhängig von ihrem Inhalt wird der Anbieterserver 100₁,..., 100ₘ ermittelt, auf dem das Dienstprogramm zur Ausführung des angeforderten Internetdienstes ausgeführt wird, und die Dienstanforderung wird an diesen Anbieterserver 100₁,..., 100ₘ adressiert. Ferner erfolgen weitere intelligente Konvertierungen, wie beispielsweise eine Veränderung und Ergänzung von in der Dienstanforderung enthaltenen Daten.

Bei den intelligenten Konvertierungen kann es sich beispielsweise auch um Korrekturen handeln, die sich nach Plausibilitätsprüfungen oder nach einer Anwendung von Parsing-Regeln, d.h. von Regeln zur Interpretation der Dienstanforderung, ergeben. Werden beispielsweise bei einem Internetdienst zur Erstellung von Adressetiketten Postfachinformationen in einem Datenfeld erkannt, das zur Bezeichnung der Straße vorgesehen ist, so kann dies von der Transformationseinheit 40 korrigiert werden.

Ebenso ist es im Rahmen der intelligenten Konvertierung möglich, Dienstanforderungen so zu verändern, dass statt des angeforderten Internetdienstes ein aktuellerer, verbesserter oder günstigerer Dienst (beispielsweise im Rahmen einer Sonderaktion) ausgeführt wird.

In einer bevorzugten Ausführungsform der Erfindung ist darüber hinaus ein so genanntes dynamisches Routing vorgesehen, bei dem die Verfügbarkeit der Anbieterserver 100₁,..., 100ₘ ermittelt und die Dienstanforderung an einen Anbieterserver 100₁,...,100ₘ adressiert wird, für den die Verfügbarkeit festgestellt wird. Ferner kann es auch vorgesehen sein, dass mittels der Transformationseinheit 40 ein so genanntes Load Balancing vorgenommen wird, bei dem neben der Verfügbarkeit auch die Auslastung des Servers 100₁,..., 100ₘ festgestellt und die Dienstanforderung an den Anbieterserver 100₁,..., 100ₘ mit der geringsten Auslastung übermittelt wird.

Nach der Bearbeitung in der Transformationseinheit 40 wird die Dienstanforderung über eine Prüfeinheit 70 oder direkt an den inneren Konnektor 50₁,...,50ₘ, übermittelt, der mit dem ermittelten Anbieterserver 100₁, ..., 100ₘ verbunden ist.

In einer bevorzugten Ausführungsform der Erfindung ist es dabei zudem vorgesehen, dass zusammen mit der Dienstanforderung eine authentische Zusatzinformation, beispielsweise eine verschlüsselte Information, von der Transformationseinheit 40 an den Anbieterserver 100₁,...,100ₘ übermittelt wird. Die Zusatzinformation wird dabei mit einem der Transformationseinheit 40 bzw. dem Transformationsknoten 10 eindeutig zugeordneten Schlüssel in dem Anbieterserver 100₁,...,100ₘ entschlüsselt, um zu überprüfen, ob die Dienstanforderung von dem Transformationsknoten 10 stammt. Auf eine zusätzliche Authentifizierung und/oder Autorisierung des Markplatznutzers in dem Anbieterserver 100₁,...,100ₘ kann damit in dieser Ausführungsform der Erfindung verzichtet werden.

Die inneren Konnektoren 50₁,...,50ₘ sind in der Lage, statische Formatänderungen des Dienstprogrammaufrufs vorzunehmen und sind über Konnektorsteckplätze mit dem Transformationsknoten 10 verbunden, in die bei laufendem Betrieb innere Konnektoren 50₁,...,50ₘ eingesteckt und aus denen bei laufendem Betrieb innere Konnektoren 50₁,...,50ₘ ausgesteckt werden können.

Aufgrund der Funktionsweise der inneren Konnektoren 50₁,..., 50ₘ ist bei einer Anpassung der Dienstprogramme auf den Anbieterservern 100₁,...,100ₘ lediglich eine Anpassung der Konnektoren 50₁,...,50ₘ, nicht jedoch eine Anpassung der Transformationseinheit 40 erforderlich. Ferner können derartige Anpassungen auch bei laufendem Betrieb des Transformationsknotens 10 vorgenommen werden, indem die betroffenen inneren Konnektoren 50₁,...,50ₘ während der Anpassung ausgesteckt werden.

Über die inneren Konnektoren 50₁,..., 50ₘ wird die Dienstanforderung dem ermittelten Anbieterserver 100₁,...,100ₘ übermittelt. Dies geschieht vorzugsweise über ein Netzwerk wie das Internet oder - wenn der Transformationsknoten 10 von dem Dienstanbieter selbst betrieben wird - über ein internes Datennetzwerk des Dienstanbieters.

Nach der Bearbeitung der Dienstanforderung in dem auf dem Anbieterserver 100₁,...,100ₘ ausgeführten Dienstprogramm, d.h. nach der Ausführung des Dienstes, sendet der Anbieterserver 100₁,...,100ₘ das Bearbeitungsergebnis, d.h. die in dem Anbieterserver 100₁,..., 100ₘ bei der Ausführung des Internetdienstes bzw. des Dienstprogramms ermittelten Daten, zurück an den Transformationsknoten 10, wo es wiederum von dem inneren Konnektor 50₁,..., 50ₘ empfangen wird.

Nach dem Empfang und nach der Durchführung von gegebenenfalls vorzunehmenden Formatänderungen innerhalb des inneren Konnektors 50₁,...,50ₘ wird das Bearbeitungsergebnis an die Prüfeinheit 70 übergeben, in der eine formale Überprüfung des Bearbeitungsergebnisses vorgenommen wird. Dabei wird geprüft, ob das Bearbeitungsergebnis vollständig und formal korrekt ist. Im Hinblick auf die Vollständigkeit wird dabei beispielsweise bei einer Anforderung eines digitalen Frankiervermerks durch einen Versandinformationssystemnutzer überprüft, ob das Bearbeitungsergebnis eine Druckvorlage bzw. eine Druckvorschau des Frankiervermerks umfasst. Die Kriterien zur Überprüfung sind für die Bearbeitungsergebnisse der verschiedenen Anbieterserver 100₁,...,100ₘ in einer Datenbank des Transformationsknotens 10 hinterlegt.

Sind Vollständigkeit oder Korrektheit nicht gegeben, so wird anstelle des Bearbeitungsergebnisses oder zusätzlich zu dem Bearbeitungsergebnis eine Benachrichtigung an den Nutzercomputer 200 des Versandinformationssystemnutzers übermittelt, in der auf einen Fehler hingewiesen wird.

Die Prüfeinheit 70 ist auch in der Lage, die Verfügbarkeit der Anbieterserver 100₁,...,100ₘ zu prüfen und das Ergebnis der Transformationseinheit mitzuteilen, so dass diese auf der Basis der Überprüfungsergebnisse das beschriebene dynamische Routing von Dienstanforderungen vornehmen kann.

Das geprüfte Bearbeitungsergebnis wird innerhalb des Transformationsknotens 10 entweder über die Transformationseinheit 40 oder unter Umgehung der Transformationseinheit 40 an den äußeren Konnektor 30₁,..., 30ₙ geleitet, der mit dem Internetversandinformationssystem verbunden ist, von dem ursprünglich die Dienstanforderung stammt.

Eine weitere Bearbeitung des Bearbeitungsergebnisses in dem Transformationsknoten 40 ist dann notwendig, wenn neben einer Weiterleitung des Bearbeitungsergebnisses an den Nutzercomputer 200 des Versandinformationssystemnutzers bzw. an die Konsolidatorquelle 150 eine intelligente Verarbeitung des Bearbeitungsergebnisses vorgenommen werden soll.

Dabei kann es beispielsweise vorgesehen sein, dass im Falle eines Flächen-Versandinformationssystems zusätzlich zu der Übermittlung des Bearbeitungsergebnisses an den Nutzercomputer 200 oder anstelle der Übermittlung des Bearbeitungsergebnisses an den Nutzercomputer 200 eine Übermittlung einer Benachrichtigung über das Bearbeitungsergebnis bzw. die Inanspruchnahme des Dienstes an die Streuquelle 160 erfolgt. Die Erzeugung dieser Benachrichtigung wird dabei in der Transformationseinheit vorgenommen. Gegenstand der Benachrichtigung kann dabei beispielsweise eine Angabe darüber sein, dass ein bestimmter Versandinformationssystemnutzer einen bestimmten Internetdienst in Anspruch genommen hat. Auf diese Weise kann das Ergebnis des Dienstes auch von der Streuquelle 160 an den Nutzercomputer 200 übermittelt werden.

Nach der optionalen Bearbeitung des Bearbeitungsergebnisses durch die Transformationseinheit 40 wird dieses entweder über die Authentifizier- und Autorisiereinheit 60 oder unter Umgehung dieser Einheit an den mit dem entsprechenden Internetversandinformationssystem verbundenen äußeren Konnektor 30₁,...,30ₘ geleitet.

In einer vorteilhaften Ausführungsform der Erfindung ist es dabei vorgesehen, dass das Nutzerberechtigungsprofil in der Autorisier- und Authentifiziereinheit 60 in Abhängigkeit von dem Bearbeitungsergebnis verändert werden kann.

So ist es beispielsweise möglich, Versandinformationssystemnutzern, die einen bestimmten Internetdienst häufig in Anspruch nehmen, im Rahmen eines "frequent user program" erweiterte Berechtigungen zuzuordnen, wobei die Autorisier- und Authentifiziereinheit 60 hierfür die Anzahl der an einen bestimmten Versandinformationssystemnutzer übermittelten Bearbeitungsergebnisse ermittelt.

Der äußere Konnektor 30₁,...,30ₘ nimmt die erforderlichen Formatänderungen vor, die der Formatänderung bei der Bearbeitung der Dienstanforderung in dem äußeren Konnektor 30₁,...,30ₘ entspricht oder unabhängig von dieser vorgegeben ist. Ferner können verschiedene Formatänderungen für das Bearbeitungsergebnis und für die aus dem Bearbeitungsergebnis bestimmte Benachrichtigung an die Streuquelle 160 vorgenommen werden.

Ferner ist es möglich, im Rahmen einer Konvertierung des Bearbeitungsergebnisses in der Transformationseinheit 40 oder im Rahmen der Formatänderung in dem äußeren Konnektor 30₁,..., 30ₘ grafische Anpassungen des Bearbeitungsergebnisses vorzunehmen, so dass es an das Erscheinungsbild des Versandinformationssystems angepasst werden kann. Dies kann insbesondere dann vorgenommen werden, wenn es sich bei dem Bearbeitungsergebnis um eine Webseite mit bestimmten Informationen handelt.

Schließlich übermittelt der äußere Konnektor 30₁,..., 30ₘ das Bearbeitungsergebnis an den Computer 200 des Versandinformationssystemnutzers, von dem die Dienstanforderung stammt, bzw. an die Konsolidatorquelle 150 eines Transit-Versandinformationssystems und gegebenenfalls zusätzlich an die Streuquelle 160 eines Flächen - Versandinformationssystems.

Zur Administrierung und Überwachung des Transformationsknotens 10 ist eine Steuerungs- und Berichtseinheit 80 vorgesehen, die von einem Administrator bedient wird. An die Steuerungs- und Berichtseinheit 80 können ein oder mehrere externe Datenverarbeitungsgeräte 90 zur Auswertung von Nutzungsdaten des Transformationsknotens 10 angeschlossen sein.

Mittels der Steuerungs- und Berichtseinheit 80 können zum einen die Regeln zur Formatänderung in den äußeren Konnektoren 30₁,...,30ₙ und in den inneren Konnektoren 50₁,..., 50ₘ, die Regeln für die Authentifizier- und Autorisiereinheit 60, die Regeln für die intelligente Konvertierung in der Transformationseinheit 40, sowie die Kriterien für die Prüfung der Bearbeitungsergebnisse in der Prüfeinheit 70 festgelegt werden. Zum anderen sind die Steuerungs- und Berichtseinheit 80 in der Lage, die Inanspruchnahme des Transformationsknotens 10 und der angeschlossenen Anbieterserver 100₁,..., 100ₘ durch die Nutzer der Internetversandinformationssysteme festzustellen und in Form von Zugriffstabellen und Statistiken zur Auswertung und Abrechnung bereitzustellen. Sämtliche Administrations- und Auswertungstätigkeiten können dabei auch über die angeschlossenen Datenverarbeitungsgeräte 90 vorgenommen werden.

Ferner können insbesondere Vergleiche zwischen dem Zeitpunkt, in dem eine Dienstanforderung in dem Transformationsknoten 10 empfangen wird und dem Zeitpunkt, in dem das Bearbeitungsergebnis von dem Transformationsknoten 10 abgesendet wird, durchgeführt werden, um so eine Bearbeitungsdauer zu ermitteln und die Einhaltung von Verfügbarkeitszusagen im Einzelfall und statistisch zu überprüfen. Hierzu werden die erforderlichen Informationen zur Auswertung von der Transformationseinheit 40 an die Steuerungs- und Berichtseinheit 80 übertragen und dort bzw. in den Datenverarbeitungsgeräten 90 ausgewertet.

Ein mögliches Anwendungsszenario der Erfindung betrifft die Bereitstellung von Frankier- und Logistikdiensten, die von einem Logistikunternehmen zur Verfügung gestellt werden, für Nutzer eines Abwicklungsportals, bei dem Waren im Rahmen von Auktionen von einem Verkäufer an einen Käufer versteigert werden. In der Regel werden die ersteigerten Waren dabei als Postsendung von dem Verkäufer an den Käufer geschickt.

Im Rahmen der Erfindung können den in dem Abwicklungsportal auftretenden Verkäufern beispielsweise folgende Internetdienste angeboten werden:
- ein Internetdienst zur Erzeugung von digitalen Frankiervermerken, die von dem Verkäufer mittels seines Nutzercomputers 200 ausgedruckt werden können,
- ein Internetdienst zur Erstellung von Adressetiketten für den Versand von versteigerten Waren,
- Internetdienste zur Bestimmung eines für die Versendung geeigneten Produkts des Logistikunternehmens und zur Ermittlung von Postleitzahlen oder Einlieferungsorten wie z.B. Packstation Standorten
- ein Internetdienst zur Sendungsverfolgung (Tracking) der versandten Postsendungen.

Ein Verkäufer kann dabei beispielsweise bei der Abwicklung einer Auktion unmittelbar auf der Webseite des Abwicklungsportals eine Frankierung einer Postsendung zum Versand des versteigerten Artikels anstoßen.

Zur Frankierung kann dabei ein Internetdienst zur Erstellung digitaler Frankiervermerke genutzt werden, bei dem eine Druckvorlage eines (z.B.kryptographisch abgesicherten) digitalen Frankiervermerks in dem Anbieterserver 100₁,...,100ₘ erstellt und an den Nutzercomputer 200 des Verkäufers übermittelt wird. Bei der Druckvorlage kann es sich beispielsweise um ein PDF-Dokument handeln, das mit einem an den Nutzercomputer 200 angeschlossenen Drucker ausgedruckt werden kann.

Hierbei kann beispielsweise die üblicherweise bei der Nutzung des Frankierdienstes bestehende Notwendigkeit entfallen, dass Angaben wie Absender- und Empfängeradresse, gewünschtes Produkt und Druckmedium für die Erstellung des Frankiervermerks angegeben werden müssen, da diese Angaben innerhalb des Abwicklungsportals bekannt sind bzw. aus bekannten Angaben abgeleitet werden können. Vielmehr werden diese Informationen daher innerhalb des Abwicklungsportals zusammengestellt und in der Dienstanforderung an den Transformationsknoten 10 übermittelt. Der Transformationsknoten 10 und insbesondere die Transformationseinheit 40 übernehmen die intelligente Konvertierung in der Weise, dass bestimmte Prozessschritte, die ansonsten bei der Inanspruchnahme des Frankierdienstes durchzuführen sind, übersprungen werden können. Hierdurch wird der Prozess für den Verkäufer vereinfacht und beschleunigt. So können beispielsweise die Angaben über den Empfänger der Postsendung, d.h. über den Käufer der Waren, aus Daten entnommen werden, die vor oder während der Auktion erfasst worden sind und die automatisch in die Dienstanforderung zur Inanspruchnahme des Frankierdienstes eingebracht werden können. Die Angaben über den Absender können ebenfalls von dem Internetversandinformationssystem bereitgestellt und automatisch in die Dienstanforderung eingebracht werden.

Im Rahmen der Bearbeitung der Dienstanforderung in dem Transformationsknoten 10 erfolgen eine Formatänderung der Dienstanforderung, eine Autorisierung der Nutzung des Frankierdienstes oder der anderen Dienste, das Routing und eine intelligente Konvertierung sowie die Weiterleitung der Dienstanforderung an den Anbieterserver 100₁,..., 100ₘ, in dem der Frankierdienst ausgeführt wird.

Da es sich bei einem Abwicklungsportal in der Regel um ein Flächen-Versandinformationssystem handelt, wird das in dem Anbieterserver 100₁,...,100ₘ ermittelte Bearbeitungsergebnis von dem Transformationsknoten 10 unmittelbar an den Nutzercomputer 200 des Verkäufers übermittelt. In der Prüfeinheit 70 des Transformationsknotens 10 kann beispielsweise überprüft werden, ob das in dem Anbieterserver 100₁,..., 100ₘ bei der Ausführung des Frankierdienstes ermittelte Bearbeitungsergebnis die Druckvorlage des digitalen Frankiervermerks enthält.

Ferner wird eine Benachrichtigung über die Ausführung des Frankierdienstes generiert und an die Streuquelle 160 des Abwicklungsportals übermittelt. Diese kann beispielsweise auch dazu dienen, dem Verkäufer auf der Webseite des Abwicklungsportals eine Information über die erfolgreiche Ausführung des Frankierdienstes anzeigen zu können.

Weiterhin ist es möglich, Zugriffslisten und Statistiken über die Nutzung der Frankier- und Logistikdienste durch Nutzer des Abwicklungsportals zu erstellen.

Schließlich dient der Transformationsknoten dazu, die mit dem Internetversandinformationssystem vereinbarten Rahmenbedingungen für die Bereitstellung der Dienste (engl. "Service Level Agreement", kurz "SLA") zu überprüfen und Abweichungen zu melden und zu dokumentieren. Wichtig in diesem Zusammenhang sind u.a. die Verfügbarkeit der Anbieterserver 100₁,..., 100ₘ (d.h. Anforderungen müssen bearbeitet werden können) und die Bearbeitungsdauer (d.h. Bearbeitungsergebnisse müssen innerhalb einer bestimmten Zeit vorliegen).

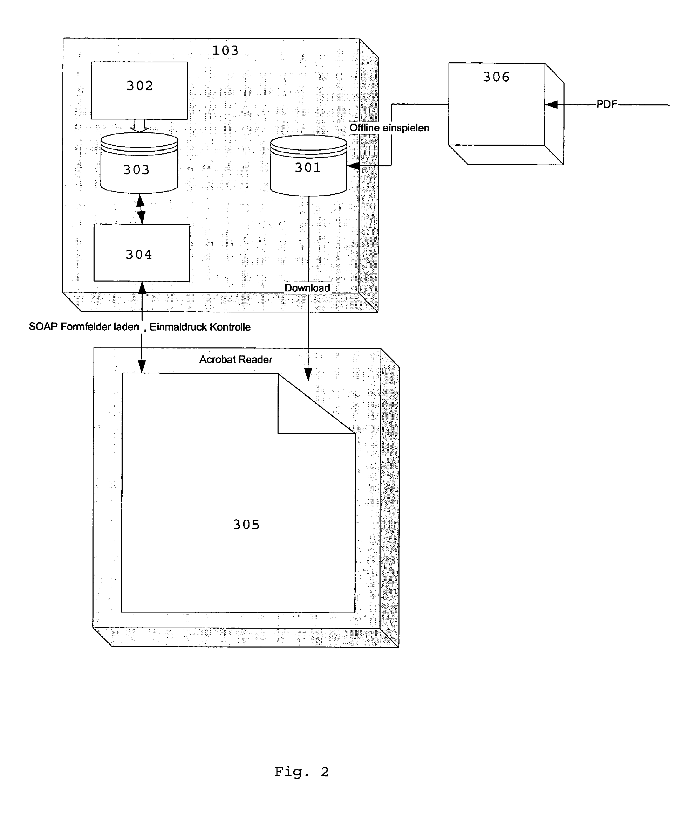

Fig. 2 zeigt eine schematische Darstellung einer Integration einer Labelerzeugung in ein erfindungsgemäßes System.

Das dargestellte System beinhaltet einen Server 103, der eine Übertragung darstellbarer Inhalte ermöglicht.

Die darstellbaren Inhalte für die Erzeugung des Labels bestehen aus statischen Inhalten und dynamischen Inhalten.

In der dargestellten Ausführungsform werden die statischen Inhalte als PDF-Templates in ein zu erzeugendes Dokument eingebracht.

Dynamische Inhalte werden von einem geeigneten Server, vorzugsweise einem POP-Web-Server 302 in einen Dokumentendatensatz 303 eingebracht. Diese dynamischen Inhalte werden ggf. durch weitere Inhalte ergänzt. Bei den weiteren Inhalten kann es sich - je nach beabsichtigtem Einsatz - um statische Inhalte oder um dynamische Inhalte handeln. Eine Hinzufügung von dynamischen Inhalten ist bevorzugt, da sich hierdurch auf eine besonders einfache und zweckmäßige Weise identifizierbare Dokumente erstellen lassen.

Dies geschieht in einer besonders bevorzugten Ausführungsform der Erfindung dadurch, dass die dynamischen Inhalte mit Lizenzierungsinformationen 304 verknüpft werden.

Nachfolgend wird die Erfindung am Beispiel der Erzeugung von Labeln erläutert. Bei den Labeln handelt es sich beispielsweise um Adresslabel und/oder Frankierlabel. Derartige Label eignen sich insbesondere für eine Steuerung logistischer Vorgänge, beispielsweise "tracking und tracing", sowie für die Steuerung logistischer Prozesse, beispielsweise für die Sortierung von Postsendungen.

Für diesen Zweck sind die Label vorzugsweise maschinenlesbar ausgestaltet.

Das zu druckende Label wird mit einem PDF-Umschlag versehen. Innerhalb dieses Umschlags wird in Kommunikation mit dem Server 103 eine Übertragung der Lizenzierungsinformationen 304 ermöglicht.

Durch Einbeziehung der Lizenzierungsinformationen 304 wird somit ein Lizenzservice für den Druck des PDF-Umschlages bereitgestellt. Der Lizenzservice steuert den Druck des in dem PDF-Umschlag enthaltenen Dokumentes.

Da auf diese Weise intelligente Dokumente bereitgestellt werden, werden sie nachfolgend als iPDF bezeichnet.

### Folgende Prozessschritte werden hierbei vorgenommen:

Während der Generierung (oder eventuell auch im Vorfeld) des PDF wird jedes PDF mit einer eindeutigen, durch den Nutzer nicht durch Ausprobieren zu erratende Dokument-ID verknüpft.

Diese Dokument-ID wird einerseits in das iPDF 'eingebettet', andererseits auch in einer Datenbanktabelle der Anwendung eingefügt.

Für die Umsetzung der Verhinderung von Mehrfachdrucken werden innerhalb des zum Anwender gelieferten PDFs Mechanismen eingebaut, die vor jedem Druck überprüfen, ob das Dokument bereits einmal gedruckt wurde.

Für diese Überprüfung muss aus dem Acrobat Reader eine Verbindung mit einem von der Anwendung gestellten Service aufgenommen werden, über die diese Überprüfung vorgenommen wird.

Für den Fall, dass eine Berechtigung des Benutzers zur Erzeugung eines Labels festgestellt wurde, werden Daten für die Generierung des intelligenten Dokuments bereitgestellt.

Diese Berechtigung liegt bei einem Retourensystem dann vor, wenn anhand wenigstens eines vorgebbaren Kriteriums eine Berechtigung zur Zurücksendung der Ware von dem Benutzer an den Versandhändler festgestellt wurde.

In einem darauf folgenden Verfahrensschritt werden dann die Daten für die Generierung des intelligenten Dokuments - beispielsweise als PDF bereitgestellt.

Zu diesem Zeitpunkt generiert die Serveranwendung für jedes aus dem Warenkorb zu generierenden PDF einen Datensatz, in dem alle für die Generierung notwendigen Angaben bereits vollständig aufgelöst sind.

Ein für die Kontrolle des Einmaldrucks vorteilhafter Datensatz ist nachfolgend dargestellt.

**Dokumenten-Datensatz**

| **Feldname** | **Typ** | **Beschreibung** |
|---|---|---|
| Dokument-ID | ID (PK) | ID des Dokumentes. Diese ID ist auch im dem ausgelieferten iPDF-Umschlags eingebettet. |
| CreateDate | TimeStamp | Zeitstempel der Erzeugung der PDF |
| ValidUntil | TimeStamp | Gültig bis |
| Printed | TimeStamp | Wurde das PDF bereits gedruckt. |
| DownloadedFirst | TimeStamp | Wann wurde das PDF erstmals Geladen. |
| DownloadedLast | TimeStamp | Wann wurde das PDF zuletzt Geladen. |
| DownloadCounter | Integer | Wie oft wurde das PDF geladen. |
| FormularData | Blob | Die Formulardaten des PDF. Hierunter fallen: Absender- und Empfängeradressen. Codes für Barcodes. Produkt-Services (z.B. Paket grün) Informationen zu gewählten Zu-satzservices, soweit diese den Eindruck betreffen. Informationen, die die Art und oder den Umfang der zurückzusendenden Ware betreffen. |

*FormularData* hält in einer strukturierten Form (XML) bezüglich der einzudruckenden Daten alle bereits aufgelösten Daten. So werden z. B. die bereits generierten Sendungs-Identifizierer, Leitcodes und evt. weitere Angaben (auch Preise, auch wenn dies zurzeit nicht vorgesehen ist) bereits als Zahlen oder Zeichenketten vorgehalten. Eine nachträgliche Berechnung solcher Daten ist nicht vorgesehen, da diese evtl. zu anderen Ergebnissen kommen könnte.

Weiterhin müssen in diesem *FormularData-Feld* Referenzen auf die PDF-Vorlage sowie die Koordinaten für den Eindruck vorgehalten werden. Hierfür werden Ressourcen-IDs aus dem Konfigurations-Repository verwendet. Da sich die hinter einer Ressourcen-ID stehende Ressource während der Lebenszeit der Anwendung (sprich auch bei geänderter Version durch Änderung der Anwendungskonfiguration) nicht ändert, wird eine Generierung des PDF stets zu gleichen Ergebnissen kommen.

Auf die dargestellte Weise ist es möglich, PDFs oder andere intelligente Dokumente im Sinne der Erfindung anhand eines Dokumenten-Datensatzes zu generieren. Der Dokumenten-Datensatz hat beispielsweise die zuvor dargestellten Feldinhalte.

Nach Aufruf einer geeigneten Aufforderung kann dem Nutzer über eine URL eine Dokument-ID für den späteren Download in Form einer URL zur Verfügung gestellt werden.

### Beispiel:

### http://pop.dhl.de/getPDF?documentId=abxkd12fszo8afwg30y

Anhand der Dokument-ID kann direkt ein PDF erzeugt werden.

Da das vom Nutzer downgeloadete Dokument lediglich ein leeres Formular darstellt, kann ein allgemeines - eventuell für jedes Produkt (Produktschlüssel) individuelles - PDF zur Verfügung gestellt werden.

Das Servlet, das das PDF ausliefert, muss nun lediglich den Dateinamen für das PDF so umbenennen, dass die Dokument-ID im Dateinamen enthalten ist.

### Signieren des Dokumentes über ARES 306

Die Vorlagen werden offline während der Entwicklung bzw. Vorbereitungsphase für ein neues Produktes durch den Acrobat Reader Extension Server signiert.

Das durch ARES 306 signierte Dokument wird dann in der Anwendung in das Konfigurations-Repository eingespielt.

### iPDF Umschlag, Muster- und Portodokument

Nachdem der Anwender das generierte PDF herunter geladen hat, wird ihm auf der ersten Seite der Umschlag des PDF angezeigt.

Es ist vorteilhaft, bei dem Laden des PDFs in einem geeigneten Leseprogramm, insbesondere einem Acrobat Reader, einzelne, mehrere oder sämtliche folgender Prüfschritte vorzunehmen:
- Kompatibilität des Leseprogramms,
- Bestehen einer Internetverbindung,
- Gültigkeit der Dokumenten-ID,
- Überprüfung, ob bereits ein Ausdruck erfolgte.

Für die letzten beiden Prüfungen wird über die SOAP-Schnittstelle des Acrobat Readers ein von der Anwendung zur Verfügung gestellter Service aufgerufen, der zurück gibt, ob die übermittelte Dokumenten-ID vorhanden ist und/oder bereits als gedruckt in der Datenbank markiert wurde.

Mittels der Dokument-ID werden dann die Formularfelder über die SOAP-Schnittstelle vom POP-eigenen Server geladen und in die Formularfelder gefüllt.

Konnte die Dokumenten-ID nicht ermittelt werden - z.B. da der Anwender das PDF-Dokument umbenannt hatte -, wird er über ein Acrobat Formfeld aufgefordert, die Dokumenten-ID einzugeben. Die Dokumenten-IDs werden dem Nutzer in der ihm zugesendeten Email zusätzlich mitgeteilt.

Für den Musterdruck werden für die Barcodes Dummy-Codes verwendet. Die korrekten Barcodes werden erst für den Portodruck durch JavaScript kurzzeitig gesetzt.

### Verwendete PDF-Reader Funktionalität (Technologie)

Für die dynamische Abfrage des Lizenzservers aus dem Acrobat Reader heraus nutzt die Anwendung folgende JavaScript-Funktionen:
- app.viewerVersion: Für das Überprüfen der der Reader-Version.
- SOAP.*: Für das Prüfen auf Internetverbindung.
- document.getField("feldname").display = display.hidden / display.visible: Für das Ein- und Ausblenden von "Muster" Überdrucken.
- document.print({bUI: true, nStart: 1, nEnd: 1, bSilent: true, bAnnotation: true}) bzw. document.print({bUI: false, nStart: 1, nEnd: 1, bSilent: true, bAnnotation: true}): Für das direkte Drucken des Dokumentes ohne Nutzerinteraktion.
- Die eigentlich zu druckenden PDFs werden als Annotation-Formfelder hinterlegt (ursprünglich für ein visuelles Feedback - z.B. beim Drücken eines Buttons - gedacht, um zwischen gedrücktem und nicht gedrücktem Zustand zu unterscheiden) und nur unmittelbar vor dem Druck auf "visible" geschaltet. (Anmerkung: Dieser Ansatz wird ggf. noch überarbeitet, da Acrobat Reader bei einigen Szenarien Probleme hat, iPDFs auszudrucken).
- Barcode-Felder. Der Acrobat Reader unterstützt Formfelder, die zu einem Wert (i.d.R. Zahlenwert) einen entsprechenden Barcode anzeigen.
- Alternativ können für Barcode-Felder spezielle Fonts verwendet werden, die im dem Dokument eingebettet werden.
- Für Barcodetypen, die der Acrobat Reader weder intern, noch durch zusätzliche Schriftarten unterstützt, kann der Barcode als Bitmap-Image über eine externe URL geladen werden. Hierzu müsste in der Anwendung ein Servlet-Service implementiert werden, der das entsprechende Bitmap generiert und zur Verfügung stellt.

Die dargestellten Funktionalitäten weisen mehrere Vorteile auf:

Da der Nutzer keine individualisierten PDF downloaded, müssen die PDFs nur pro Template/Produkt über den ARES-Server signiert werden.

Das hat zur Konsequenz, dass ein ARES 306 während des Normalbetriebes von der Anwendung nicht benötigt wird.

Es ist zweckmäßig, den ARES 306 für eine Einführung neuer Dokumenttypen - insbesondere für eine Einführung neuer Produkte eines Dienstungsanbieters - einzusetzen, um einmal das entsprechende PDF zu signieren. Innerhalb der Anwendung wird dann das signierte Dokument als Ressource eingeführt. Diese Installation des ARES 306 kann auf einem beliebigen Rechner geschehen. Das Interface für das Signieren einer Dokumentvorlage kann einfach gestaltet sein.

Der Download der PDFs ist ein einfaches - quasi statisches - Ausliefern einer Datei durch die Pop-Anwendung. Eventuell Performance-relevante Prozesse für den Eindruck entfallen.

Die PDFs können mit Standardwerkzeugen, die beispielsweise von dem Unternehmen Adobe bereitgestellt werden, erstellt werden (mit Acrobat-Professional können die Position der Formfelder definiert werden). Das Befüllen der PDF-Formfelder innerhalb des Acrobat Readers ist eine Standardfunktion.

Weiterhin entfallen durch den Wegfall der Notwendigkeit des Signierens jedes einzelnen individuellen PDFs auch an dieser Stelle eventuell auftretende Fehlerquellen, bzw. Performance-Engpässe.

Die zuvor gewählte Darstellung bezieht sich auf PDF-Dokumente. Es ist jedoch gleichfalls möglich, Dokumente und Programme mit vergleichbaren Funktionen einzusetzen.

Dokumente im Sinne der vorliegenden Erfindung sind vorzugsweise graphisch darstellbar. Je nach Einsatzgebiet sind sie manuell oder maschinell erfassbar. Es ist je nach Einsatzgebiet ferner zweckmäßig, eine Verschlüsselung vorzusehen.

Die Erfindung umfasst auch Dokumente, die nicht graphisch darstellbar sind. Dokumente im Sinne der Erfindung sind insbesondere Smart-Label. Smart-Label sind RFID-Identifikationsmittel (Transponder). Diese eignen sich für einen Einsatz von Steuerungsprozessen bei der Bearbeitung oder Beförderung von physischen Objekten, insbesondere von Postsendungen oder anderen zu transportierenden Gütern.

Die dargestellten Ausführungsformen der Erfindung sind mit einer Vielzahl von Vorteilen verbunden:
- Es ist möglich, dass Layout der Label auf einfache Weise zu ändern und in begrenztem Umfang sogar die Funktionalität des "intelligenten PDFs" anpassen, ohne die Anwendung (anders wie bei Stampit-Web) neu ausrollen zu müssen, d.h. es wird nur die PDF-Vorlage ausgetauscht.
   Alternativ ist es möglich, eine neue Formatvorlage via Konfigurations-Update / Admin-Tool auf die Produktionssysteme bereitzustellen.
- Es wird eine Performance-Steigerung erzielt, so dass weniger Serverkapazität benötigt wird.
- Datenschutz und Sicherheit werden erhöht, denn im PDF - in der PDF-Vorlage - sind keine anwendungsspezifischen Daten (Adressen, Produktinformationen,...) enthalten, auch nicht wenn das PDF abgespeichert wird, nachdem die Daten via SOAP-Call zum Drucken übertragen wurden und/oder der Druck angestoßen wurde.
- In besonders bevorzugten Ausgestaltungen der Erfindung ist es möglich, die Konfiguration von Benutzersystemen - insbesondere von eingesetzten Computern der Benutzer - ggf. einschließlich eingesetzter Programmversionen zu ermitteln und ggf. auch zu protokollieren.

Auf die dargestellte Weise ist es möglich, die Label schnell, zuverlässig und bedarfsgesteuert zu übermitteln. Insbesondere ist eine Berücksichtigung von Anforderungen eines Versanddienstleisters, der zunächst eine Ware mit einer ersten Postsendung an den Benutzer übermittelt und eine gezielte Rückführung der Ware durch eine zweite Postsendung wünscht, möglich.

Dies geschieht erfindungsgemäß zweckmäßigerweise dadurch, dass auf einem ersten Übermittlungsweg ein Code an einen Benutzer übermittelt wird, dass der Code durch eine in einem Einflussbereich des Benutzers befindliche Bedieneinheit an einen Server übermittelt wird und dass der Server einen Prüfungsschritt zur Überprüfung des Codes durchführt und in Abhängigkeit von dem Ergebnis des Prüfungsschritts das Erzeugen des Labels beeinflusst.

Die Übermittlung des Codes erfolgt zweckmäßigerweise bei Eintreten eines Versandereignisses, beispielsweise bei einer Einlieferung der an den Benutzer gerichteten Postsendung, bei einem Beförderungs- oder Verarbeitungsschritt der Postsendung oder einer Auslieferung der Postsendung an den Benutzer.

Die Erfindung beinhaltet verschiedene Arten der Übermittlung des Codes und ermöglicht eine Integration verschiedener Übermittlungswege.

Um eine besonders hohe Datensicherheit zu gewährleisten, erfolgt der Prüfungsschritt so, dass er eine Gültigkeitsprüfung des Codes beinhaltet.

Zur Beschleunigung der Verarbeitung ist es zweckmäßig, dass unter Berücksichtigung des Codes eine Empfängeradresse für die Postsendung ermittelt wird.

Ferner ist es zweckmäßig, dass unter Berücksichtigung des Codes eine Absenderadresse für die Postsendung ermittelt wird.

Ferner ist es zweckmäßig, dass ggf. weitere Informationen (wie z.B. Art und Umfang oder der Zustand der Ware) unter Berücksichtigung des Codes ermittelt werden.

Nachfolgend werden in der Beschreibung der Erfindung erläuterte Begriffe zusammengefasst:
- **Anwender**
   Endanwender, der die POP-Anwendung nutzt, um Marken oder Codes zu kaufen bzw. zu nutzen.
- **Anwendung**
   Die Webanwendung *ParcelOnlinePostage.*
- **Basisprodukt**
   "Päckchen", "Paket 10kg", "Paket 20kg"; wird beispielsweise für die Gruppierung innerhalb der Produktauswahl verwendet.
- **Dokumenten-ID**
   Eindeutige Nummer, über die ein Anwender eine von ihm erworbene Marke referenzieren kann.
- **Code**
   Eine Instanz eines Codes; kann über einen eindeutigen Codes identifiziert werden.
- **Kunde**
   Begriff wird nicht benutzt, da zweideutig.
- **Versandinformationssystem**
   Jeder Anwendersession ist ein Versandinformationssystem zugeordnet, das einige Rahmenbedingungen wie die Währung vorgibt.
- **Produkt**
   Eine Kombination aus Basisprodukt und Services; wird über einen Produktschlüssel identifiziert.
- **Produktschlüssel**
   Eindeutiger Schlüssel für eine Basisprodukt/Services-Kombination.
- **Service**
   Bepreiste Eigenschaft eines Produktes.

### Bezugszeichenliste:

- 10: Transformationsknoten
- 20: Konnektor-Steckplatz
- 30: Äußerer Konnektor
- 40: Transformationseinheit
- 50: Innerer Konnektor
- 60: Authentifizier- und Autorisiereinheit
- 70: Prüfeinheit
- 80: Steuerungs- und Berichtseinheit
- 90: Datenverarbeitungsgerät
- 100: Anbieterserver
- 150: Konsolidatorquelle ("Transit-Marktplatz")
- 160: Streuquelle ("Flächen-Marktplatz")
- 200: Nutzercomputer
- 301: PDF-Template
- 302: POP-Web-Server
- 303: Dokumentendatensatz
- 304: Lizenzierungsinformationen
- 305: Intelligentes Dokument (beispielsweise iPDF)
- 306: ARES

## Patentansprüche

1. Verfahren zum Erzeugen eines auf eine Postsendung aufbringbaren Labels,
**dadurch gekennzeichnet,**
**dass** auf einem ersten Übermittlungsweg ein Code an einen Benutzer übermittelt wird, dass der Code durch eine in einem Einflussbereich des Benutzers befindliche Bedieneinheit an einen Server übermittelt wird und dass der Server einen Prüfungsschritt zur Überprüfung des Codes durchführt und in Abhängigkeit von dem Ergebnis des Prüfungsschritts das Erzeugen des Labels beeinflusst.

2. Verfahren nach Anspruch 1,
**dadurch gekennzeichnet,**
**dass** der Code einer an den Benutzer gerichteten Postsendung beigefügt ist.

3. Verfahren nach Anspruch 1 oder 2,
**dadurch gekennzeichnet,**
**dass** der Code elektronisch an den Benutzer übermittelt wird.

4. Verfahren nach einem der vorangegangenen Ansprüche,
**dadurch gekennzeichnet,**
**dass** der Code bei Eintreten eines Ereignisses an den Benutzer übermittelt wird.

5. Verfahren nach Anspruch 4,
**dadurch gekennzeichnet,**
**dass** der Code bei Eintreten eines Versandereignisses übermittelt wird.

6. Verfahren nach einem der vorangegangenen Ansprüche,
**dadurch gekennzeichnet,**
**dass** der Code auf eine Anforderung übermittelt wird.

7. Verfahren nach einem der vorangegangenen Ansprüche,
**dadurch gekennzeichnet,**
**dass** die Bedieneinheit ein Computer ist.

8. Verfahren nach einem der vorangegangenen Ansprüche,
**dadurch gekennzeichnet,**
**dass** die Bedieneinheit eine mobile Benutzereinheit ist.

9. Verfahren nach einem der vorangegangenen Ansprüche,
**dadurch gekennzeichnet,**
**dass** der Prüfungsschritt eine Gültigkeitsprüfung des Codes beinhaltet.

10. Verfahren nach einem der vorangegangenen Ansprüche,
**dadurch gekennzeichnet,**
**dass** unter Berücksichtigung des Codes eine Empfängeradresse für die Postsendung ermittelt wird.

11. Verfahren nach einem der vorangegangenen Ansprüche,
**dadurch gekennzeichnet,**
**dass** unter Berücksichtigung des Codes eine Absenderadresse für die Postsendung ermittelt wird.

12. Verfahren nach einem der vorangegangenen Ansprüche,
**dadurch gekennzeichnet,**
**dass** unter Berücksichtigung des Codes weitere Informationen zu einem mit der Postsendung zurückzusendenden Produkt (Ware) ermittelt werden und auf das Retourenlabel aufgebracht und/oder an ein Versandinformationssystem übermittelt werden.

13. Computerprogrammprodukt,
**dadurch gekennzeichnet,**
**dass** es Programm-Mittel zur Durchführung des Verfahrens nach einem oder mehreren der vorangegangenen Ansprüche enthält.

14. Vorrichtung zum Erzeugen eines auf eine Postsendung aufbringbaren Labels,
**dadurch gekennzeichnet,**
**dass** sie ein Mittel zum Empfangen eines auf einem ersten Übermittlungsweg übermittelten Codes enthält, dass sie ein Mittel zur Überprüfung des Codes durch einen Prüfungsschritt enthält und dass sie in Abhängigkeit von dem Ergebnis des Prüfungsschritts das Erzeugen des Labels beeinflusst.

## Geänderte Patentansprüche

### Geänderte Patentansprüche gemäss Regel 137(2) EPÜ.

**1.** Verfahren zum Erzeugen eines auf eine Postsendung aufbringbaren Labels, wobei auf einem Übermittlungsweg ein Code an einen Benutzer übermittelt wird und wobei der Code durch eine in einem Einflussbereich des Benutzers befindliche Bedieneinheit an einen Server übermittelt wird,
**dadurch gekennzeichnet,**
**dass** der Server einen Prüfungsschritt zur Überprüfung des Codes, umfassend eine Gültigkeitsprüfung des Codes, durchführt und in Abhängigkeit von dem Ergebnis des Prüfungsschritts das Erzeugen des Labels beeinflusst.

**2.** Verfahren nach Anspruch 1,
**dadurch gekennzeichnet,**
**dass** der Code einer an den Benutzer gerichteten Postsendung beigefügt ist.

**3.** Verfahren nach Anspruch 1 oder 2,
**dadurch gekennzeichnet,**
**dass** der Code elektronisch an den Benutzer übermittelt wird.

**4.** Verfahren nach einem der vorangegangenen Ansprüche,
**dadurch gekennzeichnet,**
**dass** der Code bei Eintreten eines Ereignisses an den Benutzer übermittelt wird.

**5.** Verfahren nach Anspruch 4,
**dadurch gekennzeichnet,**
**dass** der Code bei Eintreten eines Versandereignisses übermittelt wird.

**6.** Verfahren nach einem der vorangegangenen Ansprüche,
**dadurch gekennzeichnet,**
**dass** der Code auf eine Anforderung übermittelt wird.

**7.** Verfahren nach einem der vorangegangenen Ansprüche,
**dadurch gekennzeichnet,**
**dass** die Bedieneinheit ein Computer ist.

**8.** Verfahren nach einem der vorangegangenen Ansprüche,
**dadurch gekennzeichnet,**
**dass** die Bedieneinheit eine mobile Benutzereinheit ist.

**9.** Verfahren nach einem der vorangegangenen Ansprüche,
**dadurch gekennzeichnet,**
**dass** unter Berücksichtigung des Codes eine Empfängeradresse für die Postsendung ermittelt wird.

**10.** Verfahren nach einem der vorangegangenen Ansprüche,
**dadurch gekennzeichnet,**
**dass** unter Berücksichtigung des Codes eine Absenderadresse für die Postsendung ermittelt wird.

**11.** Verfahren nach einem der vorangegangenen Ansprüche,
**dadurch gekennzeichnet,**
**dass** unter Berücksichtigung des Codes weitere Informationen zu einem mit der Postsendung zurückzusendenden Produkt (Ware) ermittelt werden und auf das Retourenlabel aufgebracht und/oder an ein Versandinformationssystem übermittelt werden.

**12.** Computerprogrammprodukt,
**dadurch gekennzeichnet,**
**dass** es Programm-Mittel zur Durchführung des Verfahrens nach einem oder mehreren der vorangegangenen Ansprüche enthält.

**13.** Vorrichtung zum Erzeugen eines auf eine Postsendung aufbringbaren Labels, enthaltend ein Mittel zum Empfangen eines auf einem Übermittlungsweg übermittelten Codes,
**dadurch gekennzeichnet,**
**dass** sie ein Mittel zur Überprüfung des Codes, umfassend eine Gültigkeitsprüfung des Codes, durch einen Prüfungsschritt enthält und dass sie in Abhängigkeit von dem Ergebnis des Prüfungsschritts ein System zum Erzeugen des Labels beeinflusst.

**14.** Vorrichtung nach Anspruch 13,
**dadurch gekennzeichnet,**
**dass** sie zur Handhabung von Retouren in einem Retourenlogistikprozess ausgelegt ist.
